# EUROPEAN PATENT APPLICATION

(11) **EP 2 799 856 A1**
(43) Date of publication of application: **05.11.2014**
(21) Application number: 14166429.2
(22) Date of filing: 29.04.2014
(51) Int. Cl.: G01N 27/327

(54) **Analyte meter test strip detection**

(30) Priority: 30.04.2013 US 201313874144
(71) Applicant: Lifescan Scotland Limited, Inverness IV2 3ED (GB); Robb, Stuart, Dunfermline KY11 8GR (GB)
(72) Inventor: Robb, Stuart, Dunfermline, KY11 8GR (GB); Guthrie, Brian, Inverness, IV2 3ED (GB); Hamer, Malcolm, Inverness, IV2 3ED (GB); Gadde, Yeswanth, Inverness, IV2 3ED (GB); Strachan, Alexander, Inverness, IV2 3ED (GB); Borghi, Tommaso, 20126 Milano (IT)
(74) Representative: Carpmaels & Ransford LLP

(57) **Abstract**

An analyte meter having a test strip port is configured to detect whether an approved test strip has been inserted into the test strip port before turning on analyte measurement subsystems in the analyte meter. After the meter is turned on, control circuitry in the meter continues to monitor whether the test strip is removed prior to application of a blood sample on the test strip or whether the test strip is removed after application of a blood sample on the test strip, such as during an assay of the sample.

## Description

### Technical Field

This application generally relates to the field of blood analyte measurement systems and more specifically to portable analyte meters that are configured to detect whether a test strip has been removed from the analyte meter after being inserted but before an analyte measurement has been completed.

### Background

Blood glucose measurement systems typically comprise an analyte meter that is configured to receive a biosensor, usually in the form of a test strip. Because many of these systems are portable, and testing can be completed in a short amount of time, patients are able to use such devices in the normal course of their daily lives without significant interruption to their personal routines. A person with diabetes may measure their blood glucose levels several times a day as a part of a self management process to ensure glycemic control of their blood glucose within a target range. A failure to maintain target glycemic control can result in serious diabetes-related complications including cardiovascular disease, kidney disease, nerve damage and blindness.

There currently exist a number of available portable electronic analyte measurement devices that are designed to automatically activate upon detecting an insertion of a test strip that is compatible with the analyte meter. Electrical contacts in the meter establish connections with contact pads on the test strip while a microcontroller in the meter determines whether the test strip is properly inserted for use in the meter. This determination may include measurements of analog and digital voltages that are produced by the test strip in response to various activation signals transmitted thereto from the meter. If the voltage response characteristics agree with expected values, the analyte meter makes the determination that the test strip is a type of test strip that is compatible with the analyte meter.

### Brief Description Of The Drawings

The accompanying drawings, which are incorporated herein and constitute part of this specification, illustrate presently preferred embodiments of the invention, and, together with the general description given above and the detailed description given below, serve to explain features of the invention (wherein like numerals represent like elements).
FIG. 1A illustrates a diagram of an exemplary test strip based blood analyte measurement system;
FIG. 1B illustrates a diagram of an exemplary processing system of the test strip based blood analyte measurement system of FIG. 1A;
FIG. 2 illustrates a circuit diagram of an exemplary strip port connector and analog front end of the processing system of FIG. 1B;
FIGS. 3A-3B illustrate an exemplary test strip comprising contact pads and electrodes for interoperating with the blood analyte meter of FIGS. 1A-1B;
FIG. 4 illustrates a graph of measured voltage data points at a node of the circuit illustrated in FIG. 2; and
FIG. 5 illustrates a flow chart of a method of operating the blood analyte measurement system of FIGs. 1A-1B.

### Modes of Carrying Out the Invention

The following detailed description should be read with reference to the drawings, in which like elements in different drawings are identically numbered. The drawings, which are not necessarily to scale, depict selected embodiments and are not intended to limit the scope of the invention. The detailed description illustrates by way of example, not by way of limitation, the principles of the invention. This description will clearly enable one skilled in the art to make and use the invention, and describes several embodiments, adaptations, variations, alternatives and uses of the invention, including what is presently believed to be the best mode of carrying out the invention.

As used herein, the terms "patient" or "user" refer to any human or animal subject and are not intended to limit the systems or methods to human use, although use of the subject invention in a human patient represents a preferred embodiment.

The term "sample" means a volume of a liquid, solution or suspension, intended to be subjected to qualitative or quantitative determination of any of its properties, such as the presence or absence of a component, the concentration of a component, e.g., an analyte, etc. The embodiments of the present invention are applicable to human and animal samples of whole blood. Typical samples in the context of the present invention as described herein include blood, plasma, red blood cells, serum and suspension thereof.

The term "about" as used in connection with a numerical value throughout the description and claims denotes an interval of accuracy, familiar and acceptable to a person skilled in the art. The interval governing this term is preferably ± 10 %. Unless specified, the terms described above are not intended to narrow the scope of the invention as described herein and according to the claims.

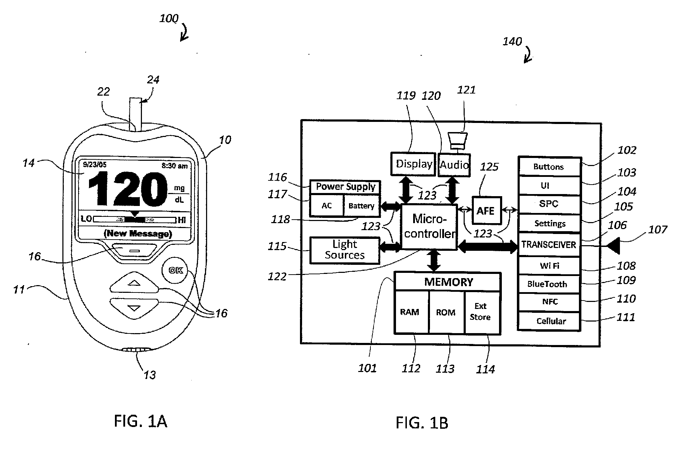

Figure 1A illustrates an analyte measurement system 100 that includes an analyte meter 10. The analyte meter 10 is defined by a housing 11 that retains a data management unit 140 and further includes a port 22 sized for receiving a biosensor. According to one embodiment, the analyte meter 10 may be a blood glucose meter and the biosensor is provided in the form of a glucose test strip 24 inserted into test strip port connector 22 for performing blood glucose measurements. The analyte meter 10 further includes a data management unit 140, Fig. 1B, disposed within the interior of the meter housing 11, a plurality of user interface buttons 16, and a display 14 as illustrated in Figure 1A. A predetermined number of glucose test strips may be stored in the housing 11 and made accessible for use in blood glucose testing. The plurality of user interface buttons 16 can be configured to allow the entry of data, to prompt an output of data, to navigate menus presented on the display 14, and to execute commands. Output data can include values representative of analyte concentration presented on the display 14. Input information, which is related to the everyday lifestyle of an individual, can include food intake, medication use, occurrence of health check-ups, and general health condition and exercise levels of an individual. These inputs can be requested via prompts presented on the display 14 and can be stored in a memory module of the analyte meter 10. Specifically and according to this exemplary embodiment, the user interface buttons 16 include markings, e.g., up-down arrows, text characters "OK", etc, which allow a user to navigate through the user interface presented on the display 14. Although the buttons 16 are shown herein as separate switches, a touch screen interface on display 14 with virtual buttons may also be utilized.

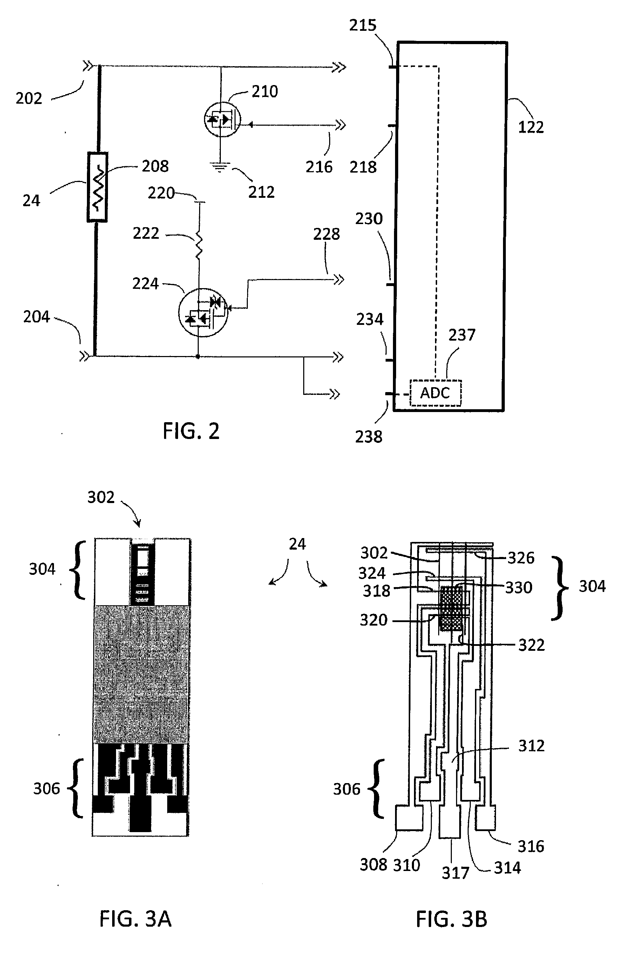

The electronic components of the analyte measurement system 100 can be disposed on, for example, a printed circuit board situated within the housing 11 and forming the data management unit 140 of the herein described system. Figure 1B illustrates, in simplified schematic form, several of the electronic subsystems disposed within the housing 11 for purposes of this embodiment. The data management unit 140 includes a processing unit 122 in the form of a microprocessor, a microcontroller, an application specific integrated circuit ("ASIC"), a mixed signal processor ("MSP"), a field programmable gate array ("FPGA"), or a combination thereof, and is electrically connected to various electronic modules included on, or connected to, the printed circuit board, as will be described below. The processing unit 122 is electrically connected to, for example, a test strip port circuit 104 ("SPC") via a front end subsystem 125, described in more detail below with reference to FIG. 2. The strip port circuit 104 is electrically connected to the strip port connector 22 during blood glucose testing. To measure a selected analyte concentration, the strip port circuit 104 detects a resistance across electrodes of analyte test strip 24 having a blood sample disposed thereon, using a potentiostat, and converts an electric current measurement into digital form for presentation on the display 14. The processing unit 122 can be configured to receive input from the strip port circuit 104, front-end subsystem 125, and may also perform a portion of the potentiostat function and the current measurement function.

The analyte test strip 24 can be in the form of an electrochemical glucose test strip. The test strip 24 can include one or more working electrodes at one end of the test strip 24. Test strip 24 can also include a plurality of electrical contact pads at a second end of the test strip 24, where each electrode can be in electrical communication with at least one electrical contact pad, as described below in relation to FIGS. 3A and 3B. Strip port connector 22 can be configured to electrically interface to the electrical contact pads and form electrical communication with the electrodes. Test strip 24 can include a reagent layer that is disposed over one or more electrodes within the test strip 24. The reagent layer can include an enzyme and a mediator. Exemplary enzymes suitable for use in the reagent layer include glucose oxidase, glucose dehydrogenase (with pyrroloquinoline quinone co-factor, "PQQ"), and glucose dehydrogenase (with flavin adenine dinucleotide co-factor, "FAD"). An exemplary mediator suitable for use in the reagent layer includes ferricyanide, which in this case is in the oxidized form. The reagent layer can be configured to physically transform glucose into an enzymatic byproduct and in the process generate an amount of reduced mediator (e.g., ferrocyanide) that is proportional to the glucose concentration. The working electrode can then be used to measure a concentration of the reduced mediator in the form of a current. In turn, microcontroller 122 can convert the current magnitude into a glucose concentration. An exemplary analyte meter performing such current measurements is described in U.S. Patent Application Publication No. US 1259/0301899 A1 entitled "System and Method for Measuring an Analyte in a Sample", which is incorporated by reference herein as if fully set forth in this application.

A display module 119, which may include a display processor and display buffer, is electrically connected to the processing unit 122 over the communication interface 123 for receiving and displaying output data, and for displaying user interface input options under control of processing unit 122. The structure of the user interface, such as menu options, is stored in user interface module 103 and is accessible by processing unit 122 for presenting menu options to a user of the analyte measurement system 100. An audio module 120 includes a speaker 121 for outputting audio data received or stored by the DMU 140. Audio outputs can include, for example, notifications, reminders, and alarms, or may include audio data to be replayed in conjunction with display data presented on the display 14. Such stored audio data can be accessed by processing unit 122 and executed as playback data at appropriate times. A volume of the audio output is controlled by the processing unit 122, and the volume setting can be stored in settings module 105, as determined by the processor or as adjusted by the user. User input module 102 receives inputs via user interface buttons 16 which are processed and transmitted to the processing unit 122 over the communication interface 123. The processing unit 122 may have electrical access to a digital time-of-day clock connected to the printed circuit board for recording dates and times of blood glucose measurements, which may then be accessed, uploaded, or displayed at a later time as necessary.

The display 14 can alternatively include a backlight whose brightness may be controlled by the processing unit 122 via a light source control module 115. Similarly, the user interface buttons 16 may also be illuminated using LED light sources electrically connected to processing unit 122 for controlling a light output of the buttons. The light source module 115 is electrically connected to the display backlight and processing unit 122. Default brightness settings of all light sources, as well as settings adjusted by the user, are stored in a settings module 105, which is accessible and adjustable by the processing unit 122.

A memory module 101, that includes but are not limited to volatile random access memory ("RAM") 112, a non-volatile memory 113, which may comprise read only memory ("ROM") or flash memory, and a circuit 114 for connecting to an external portable memory device, for example, via a USB data port, is electrically connected to the processing unit 122 over a communication interface 123. External memory devices may include flash memory devices housed in thumb drives, portable hard disk drives, data cards, or any other form of electronic storage devices. The on-board memory can include various embedded applications and stored algorithms in the form of programs executed by the processing unit 122 for operation of the analyte meter 10, as will be explained below. On board memory can also be used to store a history of a user's blood glucose measurements including dates and times associated therewith. Using the wireless transmission capability of the analyte meter 10 or the data port 13 such measurement data can be transferred via wired or wireless transmission to connected computers or other processing devices.

A wireless module 106 may include transceiver circuits for wireless digital data transmission and reception via one or more internal digital antennas 107, and is electrically connected to the processing unit 122 over communication interface 123. The wireless transceiver circuits may be in the form of integrated circuit chips, chipsets, programmable functions operable via processing unit 122, or a combination thereof. Each of the wireless transceiver circuits is compatible with a different wireless transmission standard. For example, a wireless transceiver circuit 108 may be compatible with the Wireless Local Area Network IEEE 802.11 standard known as WiFi. Transceiver circuit 108 may be configured to detect a WiFi access point in proximity to the analyte meter 10 and to transmit and receive data from such a detected WiFi access point. A wireless transceiver circuit 109 may be compatible with the Bluetooth protocol and is configured to detect and process data transmitted from a Bluetooth "beacon" in proximity to the analyte meter 10. A wireless transceiver circuit 110 may be compatible with the near field communication ("NFC") standard and is configured to establish radio communication with, for example, an NFC compliant point of sale terminal at a retail merchant in proximity to the analyte meter 10. A wireless transceiver circuit 111 may comprise a circuit for cellular communication with cellular networks and is configured to detect and link to available cellular communication towers.

A power supply module 116 is electrically connected to all modules in the housing 11 and to the processing unit 122 to supply electric power thereto. The power supply module 116 may comprise standard or rechargeable batteries 118 or an AC power supply 117 may be activated when the analyte meter 10 is connected to a source of AC power. The power supply module 116 is also electrically connected to processing unit 122 over the communication interface 123 such that processing unit 122 can monitor a power level remaining in a battery power mode of the power supply module 116.

With reference to Fig. 2 there is illustrated a portion of the front-end subsystem 125 and strip port circuit 104. The strip port circuit comprises at least a first working electrical contact 202 and a strip-detect electrical contact 204. These two electrical contacts are each formed as prongs to connect electrically with a contact pad on a test strip inserted into strip port connector 22. The contact pads of the test strip 24 are configured to short the electrical contacts 202 and 204, when the test strip is inserted, through a test strip resistance 208. This short generates a signal transmitted to the microcontroller 122 indicating that a test strip has been inserted in the test strip port connector 22, as will be explained below.

The first working electrical contact 202 is connected to an input pin 215 of the microcontroller 122, which is connected to an analog-to-digital converter "ADC" 237 in microcontroller 122 for performing a test strip current measurement, such as a blood glucose current measurement for a blood sample provided in the test strip 24. A drain and source of an N-MOSFET 210 are connected between first electrical contact 202 and ground 212, respectively. A gate 216 of the N-MOSFET 210 is connected to control pin 218 of the microcontroller 122 whereby the microcontroller 122 can controllably switch N-MOSFET 210 by transmitting a signal over control pin 218. The strip-detect electrical contact 204 is connected to a microcontroller 122 input pin 234, which is monitored by the microcontroller 122 for detecting that a test strip has been inserted into strip port connector 22. The strip-detect electrical contact 204 is also connected to an input pin 238 which is connected to the ADC 237 in microcontroller 122 for performing a voltage measurement at strip-detect electrical contact 204 to identify the test strip 24 and to detect a removal of the test strip 24 during an assay of a blood sample provided therein. A drain and source of a P-MOSFET 224 is connected between strip-detect electrical contact 204 and pull-up resistor 222, respectively. Pull up resistor 222 is connected to voltage source 220 which is set at about 3 V. A gate 228 of the P-MOSFET 224 is connected to control pin 230 of the microcontroller 122 whereby the microcontroller 122 can controllably switch the P-MOSFET 224 by transmitting a signal over control pin 230.

Prior to insertion of the test strip 24 into test strip port connector 22, the microcontroller 122 is programmed to maintain the analyte measurement system 100 in a low power mode, thereby extending the lifetime of batteries 118. During the low power mode, microcontroller 122 maintains the voltage at control pin 218, connected to gate 216 of N-MOSFET 210, at a digital high level of about 3 V, e.g. equivalent to a logical "1". This digital high signal activates N-MOSFET 210 thereby connecting first working electrical contact 202 to the ground 212. Also during the low power mode, microcontroller 122 maintains the control pin 230, connected to gate 228 of P-MOSFET 224, at a digital low level of about 0 V, e.g. equivalent to a logical "0". This digital signal activates P-MOSFET 224 thereby maintaining a digital high voltage at microcontroller input pin 234 through pull up resistor 222.

When test strip 24 is inserted into strip port connector 22 the short between the first working electrical contact 202 and strip-detect electrical contact 204 switches a voltage at microcontroller input pin 234 from its digital high voltage to an approximate digital low voltage due to the test strip's shorting of the electrical contacts 202, 204 to ground 212 through the test strip resistance 208. The falling voltage at microcontroller input pin 234 signals the microcontroller that the test strip 24 has been inserted into the strip port connector 22. This signal activates a secondary programmed operation executed by microcontroller 122 to identify whether the test strip 24 is a proper type of test strip intended for use with the analyte meter 10. Test strips intended for use with analyte meter 10 may be configured such that test strip resistance 208 generates a bias voltage detectable at the strip-detect electrical contact 204 by the ADC 237 connected thereto. In one embodiment, a detectable predetermined bias voltage of about 400 mV may be configured by designing the voltage level driven from the first working electrical contact 202 through the test strip resistance 208 such that it indicates to the microcontroller 122 at its input pin 238 that a correct type of test strip 24 is present in the strip port 22. Although other types of test strips may be configured to short the electrical contacts 202, 204, they are not configured to generate the predetermined bias voltage of 400 mV provided by the combination of the test strip resistance 208 and the bias voltage level from the first working electrical contact 202, and so a reliable test strip identification mechanism may be configured as described above.

Upon recognizing the correct bias voltage at input pin 238, microcontroller 122 switches the analyte measurement system 100 into an active mode. At the start of the active mode, the microcontroller performs hardware integrity checks, calibration of impedance circuits with respect to voltage offsets and leakage currents, and the like, and both the N-MOSFET 210 and the P-MOSFET 224 are turned off, e.g. control pin 218 is switched to a digital low voltage and control pin 230 is switched to a digital high voltage. At this point, the analyte meter awaits application of a blood sample on the test strip 24, whereafter a current measurement may take place using the first working electrical contact 202 and the ADC 237 connected thereto, such as a blood glucose current measurement, as the test strip 24 and first working electrical contact 202 are properly isolated due to turning off the N-MOSFET 210 and the P-MOSFET 224. It is possible that the test strip 24 may be removed by a user prior to an application of a blood sample, therefore, the microcontroller 122 continues to periodically monitor the voltage at the strip-detect electrical contact 204. For example, the N-MOSFET 210 and the P-MOSFET 224 may be turned on periodically, e.g. every 60 ms, and if the voltage at the strip-detect electrical contact 204 is sensed to be at a digital high voltage level, i.e. the test strip has been removed, the microcontroller 122 returns the analyte measurement system 100 back to an inactive low power mode.

After a blood sample is applied to the test strip 24, as detected by strip port electrical contacts connected to contact pads on the test strip 24 which, in turn, are connected to at least one working electrode of the test strip physically touching the blood sample, the assay for measuring an analyte level in the sample begins. The microcontroller 122 thereafter keeps the N-MOSFET 210 and the P-MOSFET 224 deactivated. It is possible that the test strip 24 may be removed by a user prior to completion of the assay. Another algorithm for determining test strip removal during an assay is available to the microcontroller 122. This algorithm includes a sequence of measurements of the voltage present at the strip-detect electrical contact 204, which may be safely undertaken without affecting a current measurement, which is necessary for completing the assay, at the first working electrical contact 202. One method of accomplishing both measurements is to alternate, or interleave, the measurement of the voltage present at the strip-detect electrical contact 204 and the current measurement at the first working electrical contact 202.

With reference to FIGs. 3A-3B, there are illustrated exemplary diagrams of the test strip 24. FIG. 3A illustrates an exterior view of the test strip 24 having an inlet 302 for receiving a sample at a distal end 304 of the test strip 24, while a plurality of contact pads are disposed at a proximal end 306 of the test strip 24, which is inserted into the test strip port 22. A plurality of electrodes extending from the contact pads at the proximal end 306 of the test strip 24 to the distal end 304 of the test strip 24 include a counter electrode 318 electrically connected to counter electrode pad 308; first working electrode 320 electrically connected to first working electrode pad 310; second working electrode 322 electrically connected to second working electrode pad 312; first hematocrit electrode 326 electrically connected to first hematocrit electrode pad 316; second hematocrit electrode 324 electrically connected to second hematocrit electrode pad 314; and strip-detect contact pad 317 which shares an electrode with the second working electrode 322. Electrical contacts formed as prongs in the SPC 104 of the analyte meter 10 electrically connect with the contact pads 308-317 of the test strip when the test strip is inserted in the SPC and thereby are electrically connected to their corresponding electrodes, which allows electrical communication between the microcontroller 122 and the test strip electrodes 318-326, as described above.

A blood sample is applied and received in blood sample inlet 302 and physically contacts reagent layer 330 and at least the first working electrodes 320, the second working electrode 322, and hematocrit electrodes 324, 326, forming an electrochemical cell therewith, wherein a glucose current traveling through the blood sample may be measured at the second working electrode, as described above. A voltage level between a preselected pair of electrodes that makes physical contact with the sample may be measured to detect the presence of the sample. The second working electrode contact pad 312 and strip-detect contact pad 317 are electrically connected due to their sharing of the electrode 322 and, when the test strip is inserted into test strip port 20, the first working electrical contact 202 and strip-detect electrical contact 204 are shorted, as described above, due to their electrical connection to the second working electrode contact pad 312 and the strip-detect contact pad 317. Exemplary embodiments of analyte meters employing test strips having various configurations of contact pads and electrodes are described in PCT Patent Application PCT/GB2012/053279 (Attorney Docket No. DDI5246PCT) entitled "Accurate Analyte Measurements for Electrochemical Test Strip Based on Sensed Physical Characteristic(s) of the Sample Containing the Analyte and Derived BioSensor Parameters" and PCT Patent Application PCT/GB2012/053276 (Attorney Docket No. DDI5220PCT) entitled "Accurate Analyte Measurements for Electrochemical Test Strip Based on Sensed Physical Characteristic(s) of the Sample Containing the Analyte", both of which patent applications are incorporated by reference herein as if fully set forth herein.

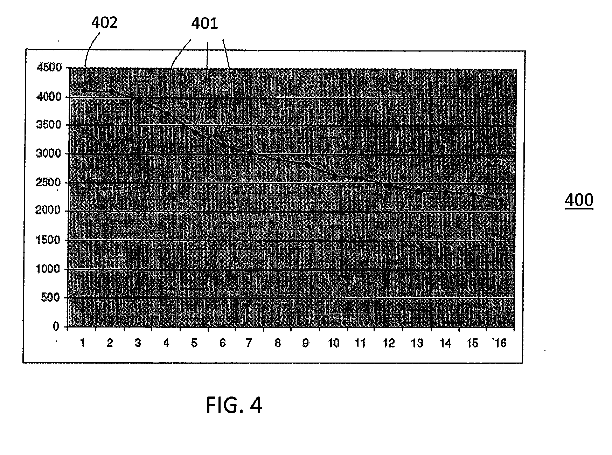

With reference to FIG. 4, there is shown an example graph 400 illustrative of a series of voltage measurements taken at strip-detect electrical contact 204 after the test strip 24 has been removed from the test strip port connector 22 during an assay. The horizontal axis demarcates the number of voltage measurement data points, e.g. sixteen, and the vertical axis demarcates digital voltage measurements of the ADC 237. The removal of the test strip 24 during an analyte measurement, i.e. the N-MOSFET 210 and the P-MOSFET 224 are turned off, floats the strip-detect electrical contact 204 voltage which, over a period of time, is known to drift or decay higher over time, or lower over time as illustrated in FIG. 4. This is a consequence of the type of ADC 237 implemented in the microcontroller 122. In one embodiment, the microcontroller 122 may include a Texas Instruments MSP430F6637 Mixed Signal Microcontroller which includes an internal 12 bit ADC having a switched capacitor network that, in operation, may be configured such that the voltage at the strip-detect electrical contact 204 will drift a measurable amount, indicating that the test strip 24 is removed from the test strip port connector 22. In summary, the switched capacitor network is first charged to an input voltage, then disconnected from the input and each capacitor successively switched either to a voltage reference, causing an upward drift, or ground, causing a downward drift. In one embodiment, an algorithm that may be implemented in microcontroller 122 includes monitoring and recording successive measurements of the voltage at strip-detect electrical contact 204 after the analyte measurement system 100 begins a blood analyte measurement of a blood sample. FIG. 4 illustrates such sequential voltage measurements as indicated by voltage data points 401. A voltage reference range of about 2048 mV may be used to measure this voltage, which corresponds to 4095 digital increments as output by the (12-bit) ADC, i.e. two increments per one mV. In one embodiment, an indication that the test strip has been removed from the test strip port is a consistent measured voltage at strip-detect electrical contact 204 that deviates from the bias voltage level of 400 mV at the first working electrical contact 202 by a preselected voltage level of about ±15 mV, or the deviation limit may be as high as about ±100 mV, although other deviation magnitudes may be selected depending on the performance of circuit components, desired design margins, and other factors. In the context of the ADC 237 output, a ±100 mV deviation equates to an ADC count that deviates ±200, i.e., a 600 count at a lower threshold and a 1000 count at an upper threshold, wherein the bias voltage measurement count is about 800. In one embodiment, a microcontroller algorithm may be implemented such that three such successive voltage deviations, i.e. three successive measured voltage data points above 1000, +200 from the bias voltage count 800, or another preselected magnitude, will trigger a strip removal indication by the microcontroller 122, wherein it may switch the analyte meter back into the low power mode. A more sensitive algorithm may also be implemented wherein only one measured voltage data point above 1000 will trigger a strip removal indication. Alternatively, if, for example, the ADC 237 is configured such that the voltage at strip-detect contact 204 will decrease after strip removal, then a preselected lower limit voltage level may be stored in the microcontroller 122, such as a 300 mV (600 count) lower limit, for example, and the voltage at strip-detect contact 204 is periodically checked whether it has reached the lower limit. The microcontroller 122 will then determine that the test strip has been removed if the lower limit voltage level is detected.

An alternative method of determining that the test strip 24 has been removed from the strip port 22 during an assay is to program the microcontroller 122 to monitor the current measurement taking place at the first working electrical contact 202. If the current there falls to zero, the microcontroller 122 can determine that the test strip has been removed.

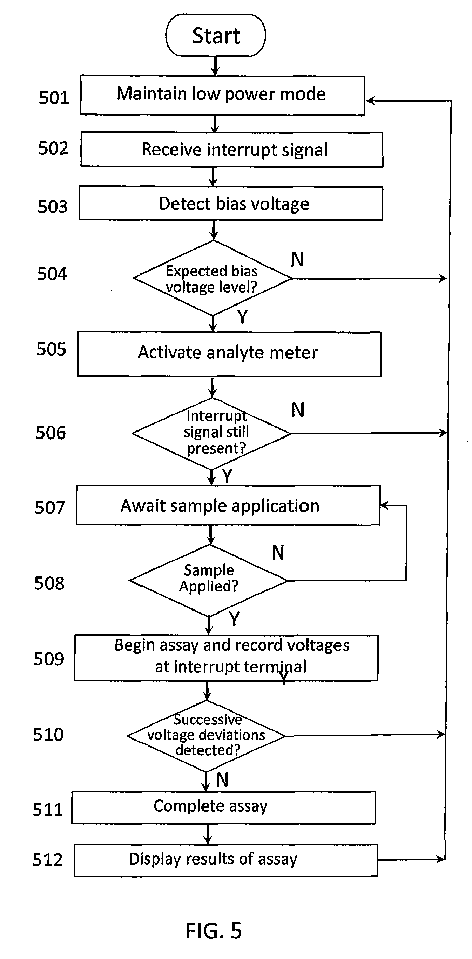

With respect to FIG. 5 there is illustrated a flow chart of a method of operating an embodiment of an analyte measurement system 100. At step 501 the analyte measurement system 100 is maintained in a low power inactive mode, which is a power saving "sleep" mode that maximizes the life of the batteries 118 used in a portable analyte measurement system 100. At step 502 an interrupt signal is received by the microcontroller 122 of the analyte measurement system 100 which indicates to the microcontroller 122 that a test strip 24 has been inserted into the strip port 22. Before powering on the analyte measurement system 100, the microcontroller 122 initiates a verification step 503 to insure that an approved test strip 24 insertion has triggered the interrupt signal. The verification step includes measuring a bias voltage at the interrupt terminal 204 connected to input pin 234. If the bias voltage is measured at the expected design level at step 504, e.g. 400 mV, the test strip is determined to be an approved test strip and the analyte meter is powered on at step 505 by command of the microcontroller 122. If the bias voltage is not at the expected design level at step 504 the microcontroller 122 returns the analyte measurement system 100 to the low power mode at step 501. The microcontroller 122 continues to monitor the status of the interrupt terminal 204, after step 505, to check whether the interrupt signal is still present. If the interrupt signal is still present at step 506, the microcontroller 122 awaits application of a sample to the test strip 24 at step 507. If the interrupt signal is no longer present at step 506, the microcontroller 122 determines that the test strip has been removed and returns the analyte measurement system 100 to the low power mode at 501. At step 508, if the sample has been applied, the microcontroller 122 begins a sample assay at step 509 and starts to measure and record voltages at the interrupt terminal 204. If the sample has not been applied at step 508, the microcontroller 122 continues waiting until a pre-programmed timeout period expires, after which the controller 122 returns the analyte meter to the low power mode. If, at step 510, successive voltage measurements at the interrupt terminal 204 do not significantly deviate from a predetermined bias voltage, e.g. about 400 mV, then the sample assay is completed at step 511 and the results are displayed on analyte meter display 14, at step 512. The meter then returns to a low power mode at step 501. If, at step 510, successive voltages measurements at the interrupt terminal 204, e.g. three such successive measurements, deviate by a specific amount, e.g. ± 15 mV, from a predetermined bias voltage, e.g. 400 mV, then the microcontroller 122 determines that the test strip 24 has been removed before the assay is completed and returns the analyte measurement system 100 to the low power mode at step 501. An alternative to the illustrated steps 509-510 may include the microcontroller 122 monitoring a current level at the first working electrical contact 202. If that current level drops to zero during the assay, the microcontroller 122 may determine that the test strip 122 has been removed and may return the analyte meter to the low power mode at step 501. If that current level does not drop to zero, the microcontroller completes the assay at step 511, as before.

In terms of operation, one aspect of the analyte meter 10 may include a capability for detecting insertion of a proper type test strip 24 into strip port connector 22 intended for use in the analyte meter 10. Improper types of test strips will not activate the analyte meter 10. The presence, or subsequent removal, of the test strip, after its initial insertion, continues to be monitored before and after a blood sample is applied thereto. If the test strip 24 is removed at any point, the analyte meter 10 is returned to a low power mode.

As will be appreciated by one skilled in the art, aspects of the present invention may be embodied as a system, method, or computer program product. Accordingly, aspects of the present invention may take the form of an entirely hardware embodiment, an entirely software embodiment (including firmware, resident software, micro-code, etc.), or an embodiment combining software and hardware aspects that may all generally be referred to herein as a "circuit," "circuitry," "module," 'subsystem" and/or "system." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible, non-transitory medium that can contain, or store a program for use by or in connection with an instruction execution system, apparatus, or device.

Program code and/or executable instructions embodied on a computer readable medium may be transmitted using any appropriate medium, including but not limited to wireless, wireline, optical fiber cable, RF, etc., or any suitable combination of the foregoing.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

Furthermore, the various methods described herein can be used to generate software codes using off-the-shelf software development tools. The methods, however, may be transformed into other software languages depending on the requirements and the availability of new software languages for coding the methods.

### PARTS LIST FOR FIGS. 1A - 5

- 10: analyte meter
- 11: housing, meter
- 13: data port
- 14: display
- 16: user interface buttons
- 22: strip port connector
- 24: test strip
- 100: analyte measurement system
- 101: memory module
- 102: buttons module
- 103: user interface module
- 104: strip port module
- 105: microcontroller settings module
- 106: transceiver module
- 107: antenna
- 108: WiFi module
- 109: Bluetooth module
- 110: NFC module
- 111: GSM module
- 112: RAM module
- 113: ROM module
- 114: external storage
- 115: light source module
- 116: power supply module
- 117: AC power supply
- 118: battery power supply
- 119: display module
- 120: audio module
- 121: speaker
- 122: microcontroller (processing unit)
- 123: communication interface
- 125: front end subsystem
- 140: data management unit
- 202: first working electrical contact
- 204: strip-detect electrical contact
- 208: test strip resistance
- 210: N-MOSFET
- 212: ground
- 215: input pin to ADC
- 216: N-MOSFET gate
- 218: control pin
- 220: voltage source
- 222: pull up resistance
- 224: P-MOSFET
- 228: P-MOSFET gate
- 230: control pin
- 234: input pin
- 237: ADC
- 238: input pin to ADC
- 302: sample inlet
- 304: distal end - electrodes
- 306: proximal end - contact pads
- 308: counter electrode contact pad
- 310: first working electrode contact pad
- 312: second working electrode contact pad
- 314: second hematocrit contact pad
- 316: first hematocrit contact pad
- 317: strip-detect contact pad
- 318: counter electrode
- 320: first working electrode
- 322: second working electrode
- 324: second hematocrit electrode
- 326: first hematocrit electrode
- 330: reagent layer
- 400: graph of voltage measurement
- 401: exemplary voltage data points
- 402: initial voltage data point
- 501: step - maintain low power mode
- 502: step - receive interrupt signal
- 503: step - detect bias voltage
- 504: decision - expected bias voltage level?
- 505: step - activate analyte meter
- 506: decision - interrupt signal still present?
- 507: step - await sample application
- 508: decision - sample applied?
- 509: step - record voltages at interrupt terminal
- 510: decision - successive voltage deviations detected?
- 511: step - complete assay
- 512: step - display results of assay

While the invention has been described in terms of particular variations and illustrative figures, those of ordinary skill in the art will recognize that the invention is not limited to the variations or figures described. In addition, where methods and steps described above indicate certain events occurring in certain order, those of ordinary skill in the art will recognize that the ordering of certain steps may be modified and that such modifications are in accordance with the variations of the invention. Additionally, certain of the steps may be performed concurrently in a parallel process when possible, as well as performed sequentially as described above. Therefore, to the extent there are variations of the invention, which are within the spirit of the disclosure or equivalent to the inventions found in the claims, it is the intent that this patent will cover those variations as well.

## Claims

1. An analyte meter comprising:
a strip port connector configured to receive an electrochemical based analytical test strip inserted into the strip port connector;
a control circuit configured to:
detect insertion of the test strip into the strip port connector,
detect a bias voltage generated in the test strip by the control circuit, and
switch the analyte meter into an active mode only upon detecting both said insertion of the test strip and the bias voltage generated in the test strip.

2. The analyte meter of claim 1 further comprising:
contacts in the strip port connector configured to electrically connect to electrodes disposed on the test strip when the test strip is inserted into the strip port connector; and
wherein the control circuit is further configured to:
maintain the analyte meter in a low power mode in the absence of detecting the test strip, and
detect the bias voltage at one of the electrodes of the inserted test strip.

3. The analyte meter of claim 2, wherein said one of the electrodes of an inserted test strip is connected to ground through a first transistor when the first transistor is turned on, and wherein said one of the electrodes is connected to a pull-up resistor through a second transistor when the second transistor is turned on, and wherein the first transistor and the second transistor are both turned on during the low power mode.

4. The analyte meter of claim 3, wherein said one of the electrodes disposed on the test strip is configured to short a first one of the contacts and a second one of the contacts when the test strip is inserted into the strip port connector, the first one of the contacts connected to the first transistor and the second one of the contacts connected to the second transistor.

5. The analyte meter of claim 4, wherein the bias voltage is measured at the second one of the contacts when the first one and the second one of the contacts are shorted.

6. The analyte meter of claim 5, wherein the control circuit is programmed to electrically check periodically whether the first one and the second one of the contacts remain shorted after the test strip has been inserted into the strip port connector.

7. The analyte meter of claim 1, wherein the control circuit is programmed to measure a voltage between a preselected pair of the contacts for detecting that a sample has been applied to the test strip after the test strip has been inserted into the strip port connector.

8. The analyte meter of claim 7, wherein the control circuit is programmed to periodically monitor a current level measured at the first contact to determine whether the test strip has been removed after the sample has been applied to the test strip.

9. The analyte meter of claim 7, wherein the control circuit is programmed to periodically measure and record voltages at the second contact to determine whether the test strip has been removed after the sample has been applied to the test strip.

10. The analyte meter of claim 9, wherein the control circuit is programmed to count a preselected number of successive recorded voltages that deviate from the bias voltage by a specified amount to determine that the test strip has been removed from the strip port connector.

11. The analyte meter of claim 10, wherein the bias voltage is about 400 mV.

12. The analyte meter of claim 11, wherein the preselected number is about three, and the specified amount is about ±15 mV.

13. A method of operating an analyte meter having a test strip port connector configured for receiving a test strip inserted therein, the method comprising:
maintaining the analyte meter in a low power inactive mode in the absence of a test strip being inserted in the port connector;
receiving an interrupt signal at an interrupt terminal of the analyte meter indicating that a test strip is inserted into the test strip port;
monitoring an electrical contact of the analyte meter to detect a presence of a predetermined bias voltage; and
switching the analyte meter to an active mode from the low power inactive mode in response to detecting the presence of the predetermined bias voltage, said predetermined bias voltage being indicative of a specific test strip configured for use with the analyte meter.

14. The method of claim 13, wherein said receiving an interrupt signal comprises detecting a voltage drop at the interrupt terminal, the voltage drop being caused by the test strip shorting contacts of the test strip port connector when the test strip is inserted therein.

15. The method of claim 14, further comprising:
periodically sensing a voltage at the interrupt terminal for detecting an absence of the interrupt signal indicating a removal of the test strip from the test strip port; and
switching the analyte meter back into the low power inactive mode in response to detecting the absence of the interrupt signal.

16. The method of claim 15, further comprising:
periodically measuring and recording voltages at the interrupt terminal, after a sample has been applied to the test strip, for detecting successive voltage deviations of a preselected magnitude indicative of the removal of the test strip from the test strip port; and
switching the analyte meter into the low power inactive mode upon detecting the successive voltage deviations of the preselected magnitude.

17. The method of claim 15, further comprising:
periodically monitoring a current level at one of the pair of contacts of the test strip port connector, after a sample has been applied to the test strip, for detecting a zero current level there; and
switching the analyte meter back into the low power inactive mode in response to detecting the zero current level.

18. A circuit for generating electric signals indicating the presence or absence of a test strip in a test strip port, the circuit comprising:
a first contact for electrically connecting to an electrode of the test strip when the test strip is inserted in the test strip port, the first contact connected to a first circuit, the first circuit for connecting the first contact to ground when the test strip is not inserted, thereby generating a predetermined low voltage signal at the first contact when the test strip is not inserted;
a second contact for connecting to the electrode of the test strip when the test strip is inserted, the second contact connected to a second circuit, the second circuit for connecting the second contact to a voltage source when the test strip is not inserted, thereby generating a predetermined high voltage signal at the second contact when the test strip is not inserted; and
wherein the first contact and the second contact are shorted when the test strip is inserted, thereby switching the predetermined high voltage signal at the second contact to a predetermined low voltage signal, and wherein the first circuit and the second circuit are configured such that a predetermined low voltage level is generated at the second contact when the test strip is inserted.

19. The circuit of claim 18, wherein the test strip comprises a known resistance, and wherein the configuration of the first circuit and the second circuit generate the predetermined low voltage level based on the known resistance.

20. The circuit of claim 18, wherein the second circuit is configured to generate the predetermined high voltage signal at the second contact when the test strip is removed from the test strip port.

21. The circuit of claim 18, further comprising an analog-to-digital converter connected to the second contact, the analog-to-digital converter generating a measureable known voltage decay at the second contact after a blood sample has been applied to the test strip and the test strip is thereafter removed from the test strip port.
